# EUROPEAN PATENT SPECIFICATION

(11) **EP 3 174 384 B1**
(45) Date of publication and mention of the grant of the patent: **07.11.2018**
(21) Application number: 15736670.9
(22) Date of filing: 24.06.2015
(51) Int. Cl.: A01K 1/10, A01K 5/02

(54) **VEHICLE, SYSTEM AND METHOD FOR DISPLACING FEED**
FAHRZEUG, SYSTEM UND VERFAHREN ZUR VERSCHIEBUNG VON FUTTER
VÉHICULE, SYSTÈME ET PROCÉDÉ POUR DÉPLACER UNE ALIMENTATION

(30) Priority: 29.07.2014 NL 2013274
(43) Date of publication of application: 07.06.2017
(73) Proprietor: Lely Patent N.V., 3147 PB Maassluis (NL)
(72) Inventor: VAN DEN BERG, Karel, NL-3147 PB Maassluis (NL); VAN PAASSEN, Nicolaas Johannes Wilhelmus, NL-3147 PB Maassluis (NL)
(74) Representative: Octrooibureau Van der Lely N.V.
(86) International application number: PCT/NL2015/050457
(87) International publication number: WO 2016/018141

(56) References cited:
- WO-A1-2013/004485

## Description

The invention relates to a vehicle for displacing feed which is lying on a floor, in particular feed which is lying along a feeding fence in the feeding alley of an animal shed.

WO 2009/070007 discloses an unmanned autonomous vehicle, which is configured to displace feed lying on the ground to a feeding fence. The vehicle has two separately driven rear wheels and a front wheel. The vehicle comprises an ultrasound sensor which determines the distance from the vehicle to the feeding fence. The ultrasound sensor is connected to a control unit which is programmed in such a way that the vehicle drives along the feeding fence at a predetermined distance. The outer periphery of the vehicle is formed by a freely rotatable, circular ring which is tilted downwards at an angle in such a way that the lowest point of said ring is in contact with the feed lying on the ground. As a result thereof, the circular ring is rotated when the vehicle is moved, i.e. the circular ring is driven by the contact with the ground or feed lying thereon. The rotating, circular ring displaces the feed sideways towards the feeding fence.

The angle α between the circular ring and the ground is adjustable, for example by a cylinder which is controlled by the control unit. In addition, the lowest point of the circular ring may be moved to the left or right of the central longitudinal axis of the vehicle by a manual height adjustment of a rear wheel or both rear wheels. However, adjusting the position of the lowest point, viewed in the peripheral direction of the ring, by adjusting the height of a rear wheel or both rear wheels is relatively laborious.

WO 2013/004485 A1 discloses an autonomous and self-propelled vehicle, which comprises a frame and a housing arranged on the frame. The housing comprises feed-displacement means for displacing feed substantially laterally with respect to a direction of travel.

It is an object of the invention to provide an improved vehicle for displacing feed lying on a floor, in particular a vehicle for displacing feed lying on a floor, wherein the lowest point can readily be adjusted.

According to the invention, this object is achieved by a vehicle for displacing feed which is lying on a floor, in particular feed along a feeding fence, such as in the feeding alley of an animal shed, which vehicle comprises:
- a frame which is provided with:
   - several wheels which are displaceable across the floor,
   - a drive and steer system for driving and steering the vehicle, which drive and steer system is provided with at least one electrical drive motor for driving at least one of the wheels and a battery system for storing electrical energy, which battery system is connected to the or each electrical drive motor,
- a skirt carrier which is arranged on the frame,
- a circumferential skirt having an outer surface for displacing and/or pushing the feed lying on the floor, wherein the skirt, preferably by means of bearing elements, is suspended from the skirt carrier so as to be rotatable about an axis of rotation, which runs obliquely at an angle α with respect to the vertical, and wherein the skirt has a circumferential bottom edge which extends in a plane which runs substantially at right angles with respect to the axis of rotation and runs with respect to the floor at said angle α, in such a way that a lowest point of said bottom edge contacts the floor and/or the feed lying thereon and the skirt rotates about said axis of rotation when the vehicle is displaced in a direction of travel as a result of said contact of the lowest point and/or adjacent peripheral parts of the bottom edge with the floor and/or the feed lying thereon in order to displace and/or push the feed lying on the floor in a direction transversely to the direction of travel of the vehicle by means of the outer surface of the rotating skirt,
characterized in that
the skirt carrier is connected to the frame so as to be swivelable about a swivel axis which runs substantially vertically, and the position of the lowest point of the bottom edge of the skirt, viewed in the peripheral direction of said bottom edge, is adjustable by swivelling the skirt carrier about the swivel axis.

The term "horizontal" is understood to mean substantially parallel to the running plane which is delimited by the wheels, in particular the lowest points of the wheels. In other words, the term "horizontal" is understood to mean substantially parallel to the floor, for example a floor surface of a feeding alley in an animal shed or a floor along a feeding fence in the open air. The floor is preferably substantially flat. In practice, the floor will hardly slope, if at all, preferably by no more than 3° (4 cm per 100 cm). The term "vertical" is understood to mean substantially at right angles to the horizontal plane. With a flat floor which does not slope, the "vertical" runs substantially in the direction of the force of gravity.

Although the vehicle may be used with different types of feed and with different types of floors, both indoors and outdoors, the vehicle according to the invention is in particular suitable for displacing and/or pushing feed which has been deposited along a feeding fence on a floor of a feeding alley in an animal shed. The vehicle is self-propelled, unmanned and autonomous. The vehicle comprises a control unit which is connected to the drive and steer system. The electrical drive motor or drive motors of the wheels are controlled by the control unit. The vehicle comprises a horizontal, central longitudinal axis. The vehicle has, for example, two separately driven rear wheels which are arranged on either side of said central longitudinal axis, and a front wheel which is situated substantially on the central longitudinal axis.

The circumferential skirt and the circumferential bottom edge thereof preferably have a substantially circular cross section. The axis of rotation of the skirt runs obliquely at the angle α with respect to the vertical. The axis of rotation is directed obliquely forwards, viewed in the direction of travel of the vehicle. The bottom edge extends in a straight plane, which runs substantially at right angles to the axis of rotation, i.e. extends obliquely at said angle α with respect to the floor. The angle α between the axis of rotation of the skirt and the vertical equals the angle α which is included by the bottom edge of the skirt and the floor.

When the wheels of the vehicle are on a flat floor, the lowest point of the bottom edge of the skirt is at a predetermined height with respect to the floor. In other words, the lowest point is then at the predetermined height with respect to the horizontal plane which is delimited by the lowest points of the wheels of the vehicle. Even if the vehicle is configured in such a way that the lowest point of the bottom edge is at the predetermined height with respect to the floor in the case of a flat floor, the vehicle according to the invention is capable of displacing across a floor with, for example, a slope, ramp, dent, hole, etcetera, or even across rough terrain.

The predetermined height with respect to the floor is greater than or equal to 0. The bottom edge is set at such a height with respect to the floor that the lowest point contacts the floor and/or the feed lying thereon. The lowest point abuts the floor or is situated slightly above the floor, for example at a height which is less than 10 cm, preferably less than 4 cm. The lowest point makes contact with the floor, either directly or indirectly via the feed lying on the floor. The lowest point forms a point of engagement. While the vehicle is driving, the contact of the lowest point with the floor causes the skirt to rotate about the axis of rotation. In this case, the lowest point may slip with respect to the floor and/or the feed lying thereon.

Incidentally, the lowest point is formed by a dynamic point of the bottom edge, i.e. when the position of the lowest point of the bottom edge remains stationary with respect to the frame of the vehicle, the lowest point is formed by in each case a different physical point on the periphery of the bottom edge during rotation of the skirt. When, at one point in time, the lowest point is formed by a physical point on the periphery of the bottom edge, the lowest point is formed by a different physical point of the periphery of the bottom edge at a later point in time as a result of rotation of the skirt.

It should be noted that the term "lowest point" does not mean that the bottom edge can only contact the floor and/or the feed lying thereon at a single point. In practice, the bottom edge of the skirt is provided with a flexible strip, as a result of which the bottom edge is not only in contact with the floor and/or the feed lying thereon with the lowest point, but also with adjacent peripheral portions of the bottom edge.

As a result of said contact of the lowest point and/or adjacent peripheral portions of the bottom edge with the floor and/or the feed lying thereon, the skirt rotates slowly when the vehicle is being displaced. At the level of the floor, the outer surface of the skirt forms an outer peripheral wall of the vehicle which extends from the floor upwards, for example up to a height of between 10 and 80 cm, preferably between 30 and 60 cm. By means of the outer surface of the rotating skirt, the feed which is lying on the floor is displaced and/or pushed in a direction transversely to the direction of travel of the vehicle, for example in the direction of the feeding fence.

According to the invention, the position of the lowest point on the bottom edge of the skirt, viewed in the peripheral direction of said bottom edge, can readily be adjusted. To this end, the skirt carrier from which the skirt is rotatably suspended, is connected to the frame so as to be swivelable about a substantially vertical swivel axis. Preferably, the swivel axis is situated in the central longitudinal axis of the vehicle, while the axis of rotation of the skirt and the swivel axis intersect in a point. In other words, the axis of rotation of the skirt and the swivel axis are in a common vertical plane.

If the angular position of the skirt carrier is set in such a way that the skirt's axis of rotation which runs slightly obliquely extends in a vertical central plane through the central longitudinal axis of the vehicle, the lowest point is situated in said vertical central plane. In other words, the lowest point on the bottom edge of the rotating skirt is then in the centre of the vehicle. By swivelling the skirt carrier about the vertical swivel axis from said angular position, the oblique axis of rotation of the skirt, viewed in top view, comes to lie at an angle β with respect to the vertical central plane of the vehicle. In this case, the axis of rotation of the skirt continues to enclose the angle α with the vertical. Therefore, by swivelling the skirt carrier about the vertical swivel axis, the lowest point is moved to the left or right of the central longitudinal axis by the angle β. According to the invention, the lowest point is continuously variable.

By contrast with the prior art, it is not necessary according to the invention to adjust the height of a rear wheel or of both rear wheels manually in order to adjust the position of the lowest point along the bottom edge of the skirt. According to the invention, the position of the lowest point can readily be adjusted by swivelling the skirt carrier about the swivel axis. Since adjustment of the position of the lowest point by swivelling the skirt carrier is less delicate than a height adjustment of one or both rear wheels, it is moreover possible to choose the position of the lowest point along the bottom edge of the skirt particularly accurately. The vehicle for displacing feed over a floor is thus improved according to the invention.

In a preferred embodiment of the invention, the skirt carrier comprises a swivelling part which is connected to the frame so as to be swivelable about the swivel axis, as well as a tilting part which is connected to the swivelling part so as to be tiltable about a substantially horizontal tilting axis, wherein the skirt is rotatably suspended from the tilting part of the skirt carrier. As a result thereof, the vehicle is, for example, more readily able to drive up a slope or cross a ramp. In this case, the circumferential skirt tilts upwards about the horizontal tilting axis. At the same time, the position of the lowest point still remains adjustable by swivelling the swivelling part of the skirt carrier about the vertical swivel axis.

Moreover, it is preferable that the axis of rotation of the skirt is in a vertical plane which is at right angles to the tilting axis, with the lowest point of the bottom edge being in said vertical plane. In other words, the lowest point is in the vertical plane which is at right angles to the horizontal tilting axis and in which the axis of rotation extends. The angle between said vertical plane and the vertical central plane of the vehicle is equal to the angle β. By swivelling the swivelling part of the skirt carrier, the angle β changes, so that the lowest point of the bottom edge of the skirt can be moved to the left or right of the vertical central plane.

In an embodiment of the invention, the vehicle comprises an electrical adjustment motor which is connected to the battery system, and wherein the skirt carrier is drivable by means of the electrical adjustment motor for swivelling the skirt carrier about the swivel axis. By means of the electrical adjustment motor, the lowest point on the bottom edge can be moved. This only requires a limited amount of power, since the skirt can rotate about the axis of rotation. As a result thereof, the costs of the electrical adjustment motor can remain relatively low.

Moreover, the electrical adjustment motor is preferably controlled by the control unit of the vehicle. The electrical adjustment motor is controlled, for example, by the control unit on the basis of a control signal which is input by a user. In addition, the electrical adjustment motor can be controlled automatically by the control unit. For example, a route through a feeding alley is programmed in the control unit, wherein the feeding fence is initially to the right of the vehicle and the lowest point of the bottom edge is set to be at the front right. When the vehicle subsequently turns around, the feeding fence will be situated to the left of the vehicle and the lowest point automatically is moved to the front left by means of the electrical adjustment motor under the control of the control unit. Therefore, the vehicle according to the invention is suitable for many applications.

In an embodiment, the frame is provided with at least one ramp, with the skirt carrier being provided with a run-up element which moves along the ramp when the skirt carrier swivels to the ramp in order to lift the skirt carrier and the skirt suspended therefrom in such a way that the bottom edge of the skirt is completely clear from the floor. The run-up element is, for example, a run-up wheel or run-up sliding piece. The ramp forms a curved track. The ramp is attached to the frame, i.e. the ramp is arranged at a fixed position with respect to the frame. The ramp determines an end position of the skirt carrier, in which the skirt is lifted. Incidentally, the skirt carrier may also have, for example, two ramps, for example to the left and right of the vertical central plane. These two ramps then determine a left-hand and right-hand end position, while the lowest point in between is adjustable by swivelling the skirt carrier.

When swivelling the skirt carrier in the direction of the ramp, the run-up element first comes into contact with a front end of the ramp. When continuing the swivelling of the skirt carrier, the run-up element rests against the ramp. Since the ramp runs obliquely upwards, the skirt carrier and the skirt suspended therefrom are lifted up, so that the bottom edge of the skirt is completely clear from the floor. Preferably, the lowest point of the bottom edge of the skirt is then at a height above the floor of more than 10 cm, more preferably more than 15 cm or 20 cm. In that case, the vehicle can drive without the lowest point of the bottom edge coming into contact with the floor.

According to the invention, it is preferable if the skirt carrier comprises a parallelogram structure, with the parallelogram structure making an upward, substantially vertical displacement of the skirt carrier with respect to the frame possible. In particular, according to the invention, the skirt has a normal operating position when the vehicle drives across a flat floor, in which the lowest point of the circumferential bottom edge of the skirt is arranged at a predetermined height, which is preferably greater than or equal to 0, with respect to the floor in the normal operating position, and in which the skirt carrier is provided with a parallelogram structure which provides freedom of movement to the skirt in order to move from the normal operating position with respect to the floor upwards.

In practice, the floor of an animal shed is not completely smooth. With the prior-art vehicle, there is a risk that the vehicle becomes stuck in a relatively shallow dent or hole in the floor, such as a hole or pit. When a driven wheel of the vehicle drives into a pit, this wheel will sink downwards slightly, as a result of which the vehicle will rest on the floor by the bottom edge of the skirt. The driven wheel then hangs freely or turns in a slipping manner, so that the wheel generates insufficient traction to be able to drive on. By means of the parallelogram structure according to the preferred embodiment of the invention, the skirt can move upwards when a driven wheel sinks into a pit in the floor. By using the parallelogram structure, the skirt has freedom of movement in the vertical direction. The bottom edge of the skirt then does not rest on the floor, but moves upwards with respect to the wheels. As a result thereof, the vehicle can drive across uneven structures in the floor reliably. Incidentally, the angle α which the plane of the circumferential bottom edge and the floor enclose may remain substantially the same or be variable when the skirt carrier and the skirt suspended therefrom are moved upwards. As a result of the parallelogram structure, the skirt can not only execute a vertical translational movement, but also tilt slightly.

In an embodiment according to the invention, the skirt is pretensioned into the normal operating position, for example by means of a spring means which is incorporated in the parallelogram structure. However, the skirt carrier and the skirt suspended therefrom may also be pretensioned into the normal operating position on account of the force of gravity.

In a particular embodiment, the parallelogram structure comprises two lying parts which extend one above the other and two upright parts which are radially spaced apart, wherein the lying parts and the upright parts are hingeably connected to each other. In this case, it is preferable that one of the upright parts can only execute a swivelling movement about the swivel axis with respect to the frame, and the skirt is rotatably suspended from the other upright part. In this case, the parallelogram structure comprises a pair of lying parts and a pair of upright parts which are hingeably connected to each other. The lying parts each have a radial inner end and a radial outer end. The radial inner ends are hingeably connected to the one upright part, while the radial outer ends are hingeably connected to the other upright part. The two lying parts and the two upright parts together form a four-rod mechanism. Preferably, the connecting lines between the hinges of the lying parts run substantially parallel to each

### other.

Preferably, the upright part which can only swivel forms part of the swivelling part of the skirt carrier. In other words, this upright part then swivels together with the other part of the swivelling part about the vertical swivel axis with respect to the frame. This upright part forms a carrier from which the lying parts of the parallelogram structure are suspended. The lying parts and the other upright part form the tilting part of the skirt carrier. The upright part which can only swivel is preferably formed by the radial outer upright part. The radial inner upright part then carries the skirt.

According to the invention, it is possible for the lowest point of the bottom edge and the axis of rotation of the skirt and/or the swivel axis of the skirt carrier to delimit a substantially vertical plane, and wherein the lying parts extend substantially parallel to said plane, irrespective of the position of the lowest point on the bottom edge of the skirt, viewed in the peripheral direction of said bottom edge. The hinge axes of the lying parts of the parallelogram structure run substantially horizontal. The axis of rotation of the skirt, which preferably intersects the swivel axis of the skirt carrier in a point, is in a vertical plane which is at right angles to the hinge axes of the lying parts. The lowest point of the bottom edge is in said vertical plane. The angle between said vertical plane and the vertical central plane of the vehicle is equal to the angle β. By swivelling the skirt carrier with the parallelogram structure, the angle β changes. Irrespective of the position of the lowest point on the bottom edge of the skirt, i.e. in each angular position of the skirt carrier determined by the angle β, the lying parts of the parallelogram structure remain substantially aligned with the connecting line between the lowest point and the axis of rotation of the skirt. As a result thereof, the lying parts always run in the direction in which the forces at the lowest point are directed into the skirt. The forces exerted on the skirt are absorbed by the parallelogram structure in said direction, irrespective of how the position of the lowest point on the bottom edge is set. From a mechanical point of view, this is very advantageous.

In an embodiment, the vehicle comprises a distance-determining device for determining the distance up to a feeding fence situated on the floor, and a control unit which is connected to the distance-determining device and to the drive and steer system of the vehicle, wherein the control unit is configured to drive the vehicle at a predetermined distance along the feeding fence. The feeding fence delimits, for example, the feeding alley in an animal shed, with the vehicle being able to drive across the floor of the feeding alley at the predetermined distance from the feeding fence. According to the invention, the distance-determining device may be configured in different ways. However, the distance-determining device preferably comprises an ultrasound sensor.

According to the invention, the vehicle may be configured as a feed pusher. According to the invention, it is in addition possible for the vehicle to form a feed wagon, which is provided with a container for accommodating feed, and a dispensing device for dispensing feed accommodated in the container. The feed wagon preferably also comprises a mixing device for mixing feed which is accommodated in the container. Such a feed wagon or feed-mixing wagon according to the invention is also provided with a skirt for displacing and/or pushing feed in the direction of a feeding fence.

The invention also relates to a system, comprising a feeding fence and a vehicle according to any of the preceding claims. The vehicle is configured to push feed which is dispensed along the feeding fence in the direction of the feeding fence. The feeding fence delimits, for example, one side of the feeding alley in an animal shed for dairy animals which can eat at the feeding fence.

The invention furthermore relates to a method for displacing feed which is lying on a floor, in particular feed along a feeding fence, by means of a vehicle as described above, the method comprising:
- driving the vehicle across the floor in a first direction of travel, with the lowest point being at a first position on the bottom edge of the skirt, viewed in the peripheral direction of said bottom edge, and wherein the lowest point, in the first position, makes contact with the floor and/or the feed lying thereon and the skirt, as a result of said contact, rotates about the axis of rotation in order to displace the feed which is lying on the floor in a direction transversely to the first direction of travel of the vehicle by means of the outer surface of the rotating skirt,
- moving the lowest point by means of swivelling the skirt carrier about the swivel axis from the first position to a second position on the bottom edge of the skirt, viewed in the peripheral direction of said bottom edge, wherein the second position differs from the first position,
- driving the vehicle across the floor in a second direction of travel, wherein the lowest point, in the second position, makes contact with the floor and/or the feed lying thereon and the skirt, as a result of said contact, rotates about the axis of rotation in order to displace the feed which is lying on the floor in a direction transversely to the second direction of travel of the vehicle by means of the outer surface of the rotating skirt.

It should be noted that the expression "transversely" in this description is not limited to an angle of 90° with respect to the direction of travel. The phrase "displacing the feed which is lying on the floor in a direction transversely to the direction of travel of the vehicle" is to be understood to mean that the feed moves in a direction at an angle which differs from 90° with respect to the direction of travel, for example in a direction at an angle of between 30°-120° or between 45°-105°. The expression "transversely" is only intended to mean that the direction in which the feed is displaced has a component at right angles to the direction of travel.

In this case, it is preferred if the first direction of travel and the second direction of travel are opposed to each other, with the first position and the second position being situated on either side of a vertical central plane of the vehicle. The vertical central plane extends through the central longitudinal axis of the vehicle. For example, the vehicle drives in the first direction of travel through a feeding alley in an animal shed, with the feeding fence being situated to the left of the vehicle. The lowest point is then adjusted to the front left in order to push the feed which is lying along the feeding fence to the left-hand side, in the direction of the feeding fence. At the end of the feeding alley, the vehicle turns around, in which case the feeding fence comes to lie to the right of the vehicle. The lowest point is then moved to the second position on the opposite side of the vehicle, i.e. in this case to the front right. Subsequently, the vehicle drives again along the same feeding fence in the second direction of travel, in which case the direction of rotation of the skirt is reversed and the feed which is lying along the feeding fence is pushed to the right-hand side, in the direction of the feeding fence.

According to the invention, it is possible for the vehicle to be provided with an electrical adjustment motor which is connected to the battery system, and a control unit which is connected to the electrical adjustment motor, wherein the skirt carrier is driven by means of the electrical adjustment motor in order to swivel the skirt carrier about the swivel axis, and wherein a route for the vehicle is programmed in the control unit, and wherein the electrical adjustment motor is controlled by the control unit on the basis of the programmed route to automatically adjust the lowest point when said route is being driven. As a result thereof, the vehicle can automatically follow a route in which the feeding fence is successively lying on different sides of the vehicle.

The invention will now be explained in more detail with reference to the attached figures, in which:
Fig. 1 shows a top view of a vehicle according to the invention which drives along a feeding fence in an animal shed.
Fig. 2 shows a perspective view of the vehicle illustrated in Fig. 1.
Fig. 3a shows a partly cut-away side view of the vehicle illustrated in Fig. 1.
Figs 3b shows a cut-away top view of the vehicle illustrated in Fig. 1, wherein the lowest point of the bottom edge is situated to the front left, viewed in the direction of travel.
Fig. 4a shows a partly cut-away side view of a second embodiment of a vehicle according to the invention.
Fig. 4b shows a partly cut-away side view of the vehicle illustrated in Fig. 4a which has sunk into a pit in the floor by a rear wheel.
Fig 4c shows a cut-away top view of the vehicle illustrated in Figs 4a and 4b, wherein the lowest point of the bottom edge is situated to the front left, viewed in the direction of travel.
Fig. 5 shows a perspective view of a third embodiment of a vehicle according to the invention.

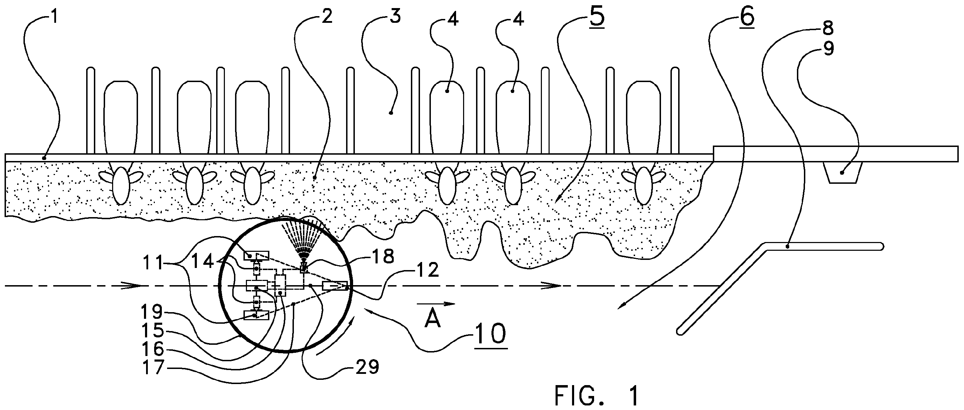

The vehicle according to the invention is denoted overall in Fig. 1 by reference numeral 10. The vehicle 10 drives in a direction of travel A along a feeding fence 1 across a floor 6 of a feeding alley 5. Feed 2 has been placed on the floor 6 of the feeding alley 5 for dairy animals 4 which can eat at the feeding fence 1 in stands 3. The feed 2 is placed at the feeding fence 1 in a manner which is known per se, for example by means of a feed-mixing wagon (not shown). The vehicle 10 is configured to push the feed 2 in the direction of the feeding fence 1.

In this exemplary embodiment, the vehicle 10 comprises a frame 17 with two rear wheels 11 and a front wheel 12. The front wheel 12 is substantially in the vertical central plane through the central longitudinal axis 29 of the vehicle 10, while the rear wheels 11 are arranged on either side of said central plane. In this exemplary embodiment, the front wheel 12 is not driven. Each rear wheel 11 is separately drivable by an electrical drive motor 14. The drive motors 14 are powered by a battery system 15 for storing electrical energy.

The battery system 15 can be charged on a charging terminal 9 which is fitted to a wall in the animal shed. The charging terminal 9 forms a charging station for the vehicle 10. The drive motors 14 are connected to a control unit 16 which controls each of the drive motors 14 separately, so that the vehicle 10 can be steered. The drive motors 14, the battery system 15 and the control unit 16 together form a drive and steer system for driving and steering the vehicle 10.

The vehicle 10 is furthermore provided with a distance-determining device 18, in the illustrated exemplary embodiment an ultrasound sensor, for determining the distance of the vehicle 10 to the feeding fence 1. However, the vehicle 10 may also comprise other navigation means, such as a gyroscope or a sensor for following a metal strip 8 which has been fitted in the floor 6 (see Fig. 1). The distance-determining device 18 and/or other navigation means are connected to the control unit 16 in order to drive the vehicle 10 along a route which has been programmed beforehand in the control unit 16 at a predetermined distance along the feeding fence 1. The power of the distance-determining device 18 is provided by the battery system 15.

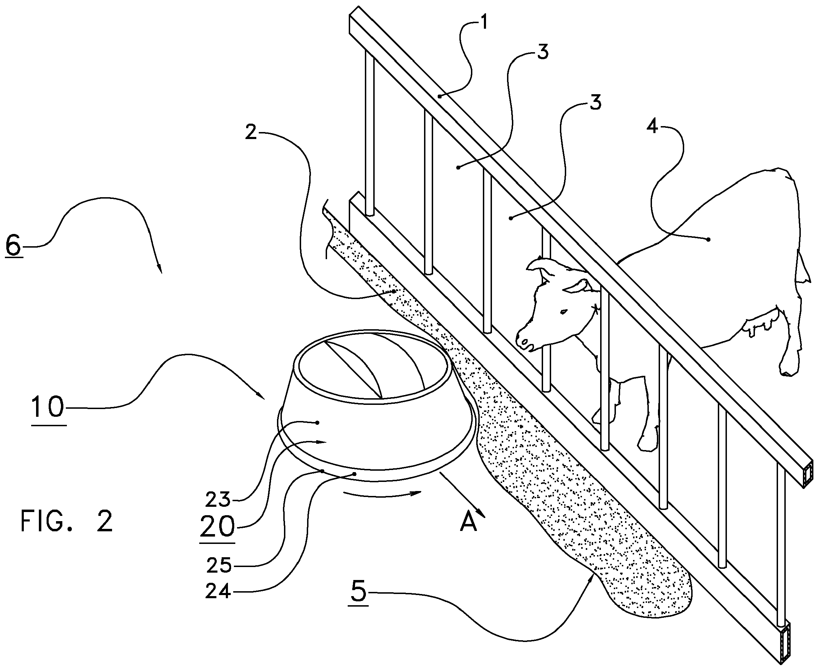

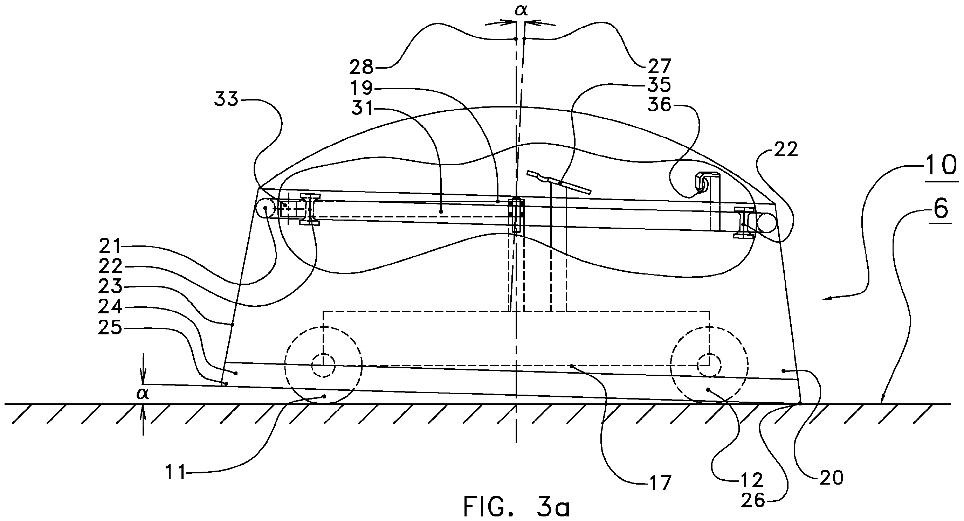

As illustrated in Figs 2 and 3a, the vehicle 10 comprises a circumferential skirt 20 with an outer surface for displacing and/or pushing the feed 2. In this exemplary embodiment, the skirt 20 comprises a circumferential carrier rail 21. A peripheral wall 23 which comprises a flexible wearing strip 24 on its underside is attached to the carrier rail 21. The wearing strip 24 is, for example, made of a flexible plastic. The wearing strip 24 forms a circumferential bottom edge 25 of the skirt 20. In this exemplary embodiment, the skirt 20 and its bottom edge 25 have a substantially circular cross section.

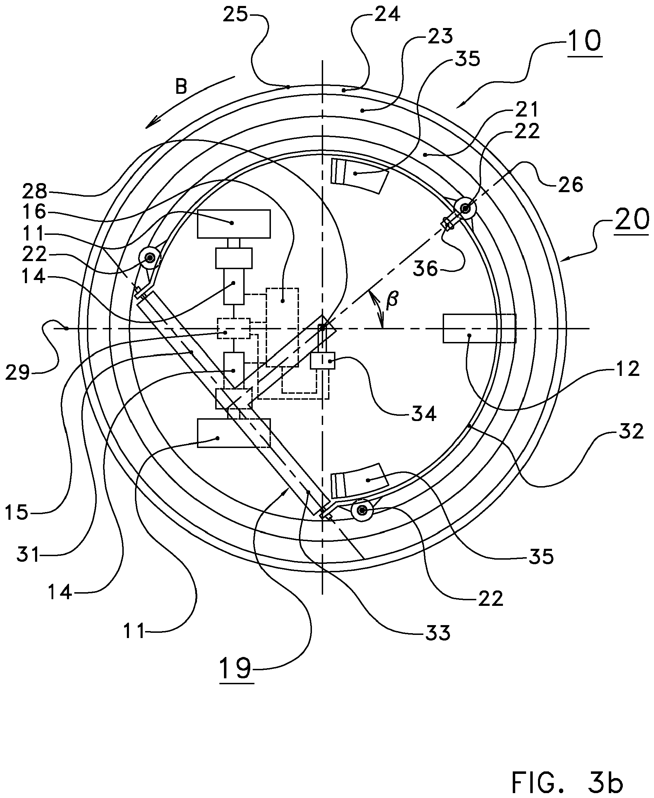

The carrier rail 21 of the skirt 20 is rotatably suspended from a skirt carrier 19 by means of bearing elements, in this exemplary embodiment conical wheels 22. As is illustrated in Figs 3a and b, the skirt carrier 19 in this exemplary embodiment comprises a swivelling part 31 which is connected to the frame 17 so as to be swivelable about a swivel axis 28 which runs substantially vertically, i.e. is at right angles to the flat floor 6 of the feeding alley 5. The skirt carrier 19 furthermore comprises a tilting part 32 which is connected to the swivelling part 31 so as to be tiltable about a substantially horizontal tilting axis 33. The tilting part 32 of the skirt carrier 19 is provided with the conical wheels 22, i.e. the skirt 20 is rotatably suspended from the tilting part 32. If the vehicle 10 drives against a rising portion of the floor 6, the skirt 20 tilts slightly upwards about the horizontal tilting axis 33. As a result thereof, the vehicle 10 can readily drive up a slope or across a ramp.

The conical wheels 22 define an axis of rotation 27 of the skirt 20 (see Fig. 3a). The axis of rotation 27 of the skirt 20 runs obliquely at an angle α with respect to the vertical. The angle α is for example between 0-5°. The swivel axis 28 of the skirt carrier 19 and the axis of rotation 27 of the skirt 20 intersect at a point. In this exemplary embodiment, the swivel axis 28 is situated on the central longitudinal axis 29 of the vehicle 10 (see Fig. 3b).

The bottom edge 25 of the skirt 20 extends in a plane which runs substantially at right angles with respect to the axis of rotation 27 and at the angle α with respect to the floor 6 (see Fig. 3a). The bottom edge 25, by a lowest point 26 and/or adjacent peripheral portions of the bottom edge 25, makes contact with the floor 6 and/or the feed 2 lying thereon. The lowest point 26 is situated outside the vertical central plane of the vehicle 10. If the vehicle 10 drives across the floor, the skirt 20 slowly rotates about the axis of rotation 27 (see arrow B in Fig. 3b) as a result of the contact of the lowest point 26 and/or adjacent peripheral portions of the bottom edge 25 with the floor 6 and/or the feed 2 lying thereon, thus resulting in the outer surface of the rotating skirt 20 pushing the feed 2 in the direction of the feeding fence 1.

The position of the lowest point 26 of the bottom edge 25 of the skirt 20, viewed in the peripheral direction of the bottom edge 25, can be adjusted by swivelling the skirt carrier 19 with respect to the frame 17 about the substantially vertical swivel axis 28. In Fig. 3b, the skirt carrier 19 is swivelled from the vertical central plane of the vehicle 10 to the left, as a result of which the oblique axis of rotation 27 of the skirt 20, projected on the floor 6, comes to lie at an angle β with respect to the vertical central plane of the vehicle 10. In this case, the axis of rotation 27 of the skirt 20 continues to enclose the angle α with the vertical. Therefore, by swivelling the skirt carrier 19 about the vertical swivel axis 28, the lowest point 26 of the bottom edge 25 has been moved to the left by the angle β. The lowest point 26 is then situated at the front left, viewed in the direction of travel of the vehicle 10. The lowest point 26, viewed in the direction of travel of the vehicle 10, may also be moved to a position at the front right by swivelling the skirt carrier 19 about the swivel axis 28 in the opposite direction of rotation (not shown). The angle β is, for example, between 0-90° to the left or to the right.

In order to adjust the position of the lowest point 26 of the bottom edge 25 of the skirt 20, the skirt carrier 19 in this exemplary embodiment is drivable by an electrical adjustment motor 34 for swivelling the skirt carrier 19 about the swivel axis 28. The electrical adjustment motor 34 is connected to the battery system 15 and the control unit 16 of the vehicle 10. Since the skirt 20 can rotate about the axis of rotation 27, the electrical adjustment motor 34 only has to have a low output in order to adjust the skirt carrier 19.

The electrical adjustment motor 34 is controlled by the control unit 16 of the vehicle 10. The adjustment motor 34 is, for example, controlled by the control unit 16 on the basis of a pre-programmed route through the feeding alley 5 stored in the control unit 16. In Fig. 1, the vehicle 10 drives from the left to the right, with the feeding fence 1 being situated to the left of the vehicle 10 and the lowest point 26 of the bottom edge 25 being set to the front left, as is illustrated in Fig. 3b, so that the skirt 20 rotates anticlockwise and its outer surface pushes the feed 2 laterally to the feeding fence 1.

When the vehicle 10 has reached the end of the feeding fence 1, the vehicle 10 turns around in the feeding alley 5. The feeding fence 1 then comes to lie to the right of the vehicle 10. In this case, the lowest point 26 automatically moves to the front right by means of the electrical adjustment motor 34 which is being controlled by the control unit 16. The vehicle 10 then drives back along the feeding fence 1, in Fig. 1 from the right-hand side to the left-hand side, with the skirt 20 now rotating clockwise. The vehicle 10 can thus push feed 2 in both directions when driving along the feeding fence 1.

As is illustrated in Figs 3a and b, two ramps 35 are attached to the frame 17 of the vehicle 10. The two ramps 35 are situated on either side of the vertical central plane of the vehicle 10. The ramps 35 each determine an end position for the skirt carrier 19. A run-up wheel 36 is attached to the skirt carrier 19. If the skirt carrier 19 is swivelled until the run-up wheel 36 makes contact with the top surface of the left-hand or right-hand ramp 35, the run-up wheel 36 is guided upwards along said ramp 35 when the skirt carrier 19 is swivelled further. In this case, the tilting part 32 of the skirt carrier 19 and the skirt 20 suspended therefrom are lifted up, so that the bottom edge 25 of the skirt 20 comes to lie above the floor 6 of the feeding alley 5 in a completely clear manner. For example, the lowest point 26 of the bottom edge 25 of the skirt 20 then lies at a height of 15 centimetres above the floor 6, so that the vehicle 10 can drive without the skirt 20 rotating. The skirt 20 is, for example, lifted up when the vehicle 10 drives from one animal shed to another animal shed.

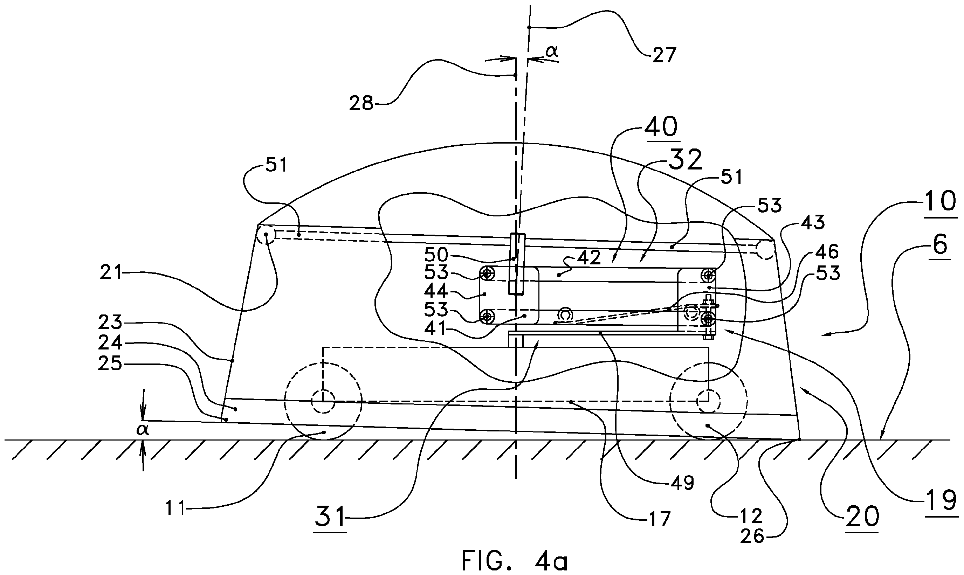

Figs 4a-c show a second embodiment of the vehicle 10 according to the invention, which is particularly suitable to reliably drive across uneven structures in the floor of the feeding alley, such as a pit. Identical or similar parts are denoted by the same reference numerals therein.

The swivelling part 31 and the tilting part 32 of the skirt carrier 19 of the vehicle 10 illustrated in Fig. 4a together form a parallelogram structure 40. The parallelogram structure 40 makes it possible to perform an upward, substantially vertical displacement of the skirt 20 with respect to the frame 17 with the wheels 11, 12. The parallelogram structure 40 comprises two lying parts 41, 42 which extend one above the other, as well as two upright parts 43, 44 which are at a radial distance apart. The lying parts 41, 42 and the upright parts 43, 44 are hingeably connected to each other, as is diagrammatically illustrated by hinge axes 53.

The swivelling part 31 comprises a radially extending swivel arm 49 which runs substantially horizontally. One of the upright parts 43 of the parallelogram structure 40 is attached to a radially situated outer end of the swivel arm 49. In this exemplary embodiment, the upright part 43 comprises a U-shaped holder. The upright part 43 and the swivel arm 49 form the swivelling part 31 and are in their entirety swivelable about the swivel axis 28.

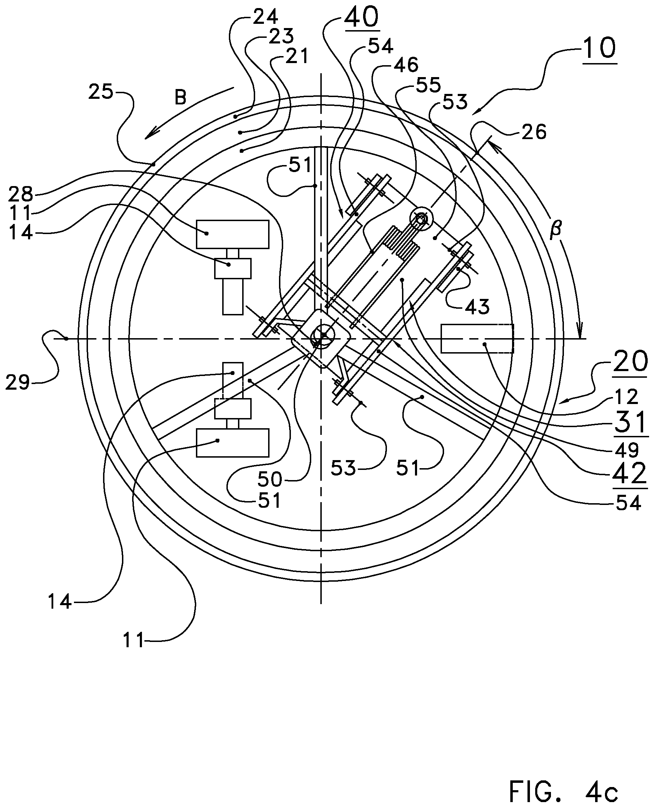

The lying parts 41, 42 are each connected to said upright part 43 of the swivelling part 31 so as to be hingeable about substantially horizontal hinge axes 53. As is illustrated in Fig. 4c, the top lying part 42 in this exemplary embodiment is formed by two strips 54 which are connected to one another by a transverse beam 55. The bottom lying part 41 also comprises two strips which are attached to each other by a transverse beam. The lying parts 41, 42 are each connected to the upright part 44 so as to be hingeable about the substantially horizontal hinge axes 53. The lying parts 41, 42 and the upright part 44 form the tilting part 32 of the skirt carrier 19.

On the upright part 44, a holder for an oblique carrying axle 50 is attached, which is connected to the circumferential carrier rail 21 of the skirt 20 by means of radial securing arms 51. The axis of rotation 27 of the skirt 20 is determined by the carrying axle 50. When the carrying axle 50 rotates, the skirt 20 rotates about the axis of rotation 27. Incidentally, in this embodiment, the skirt 20 may also be rotatably suspended by means of conical wheels as described above with reference to Figs 2 and 3a, 3b instead of by the carrying axle 50 and the securing arms 51.

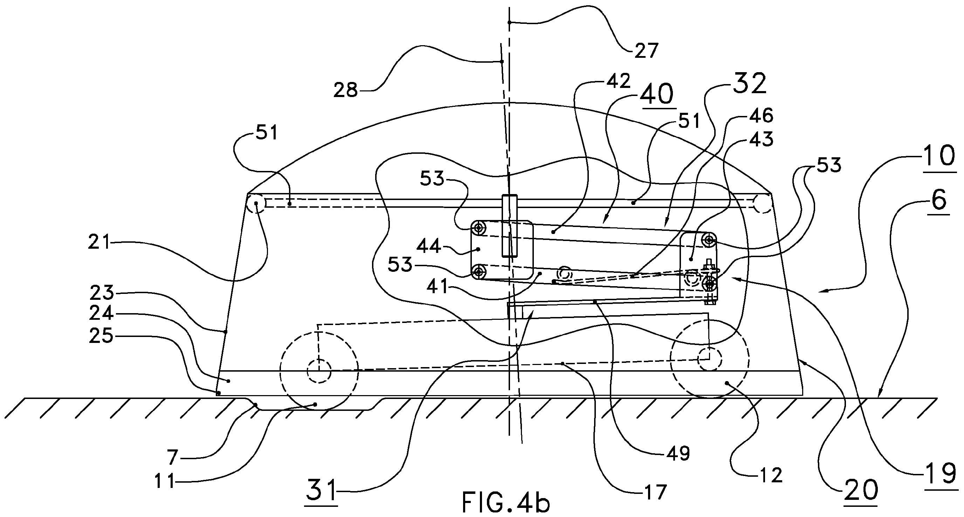

By using the parallelogram structure 40, the skirt 20 has freedom of movement in the vertical direction. If a driven rear wheel 11 of the vehicle 10 sinks into a pit in the floor 6 (see Fig. 4b), for example, the bottom edge 25 of the skirt 20 can move upwards with respect to the wheels 11, 12 by means of the hinging of the parallelogram structure 40. As a result, the driven wheel 11 maintains a sufficient degree of contact with the floor 6 to be able to drive through the pit.

As is illustrated in Fig. 4b, the driving plane delimited by the wheels 11, 12 usually no longer runs parallel to the floor 6 if the rear wheel 11 has been driven into a pit. The swivel axis 28 of the skirt carrier 19 is fixed with respect to the frame 17 and continues to extend at the same angle with respect to the frame 17, i.e. at right angles with respect to the driving plane delimited by the wheels 11, 12. Incidentally, the angle α which is enclosed by the plane of the circumferential bottom edge 25 and the driving plane delimited by the wheels 11, 12 may change slightly when the skirt 20 moves upwards. As a result of the parallelogram structure 40, the skirt 20 is, for example, not only able to perform a vertical translational movement, but can also tilt slightly forwards.

In this exemplary embodiment, the parallelogram structure 40 is pretensioned by means of a spring means 46 towards a normal operating position for pushing feed. The spring means 46 is pretensioned between a stop of the swivelling part 31 and a stop of the tilting part 32. However, according to the invention, the spring means 46 may be omitted. In this case, the skirt carrier 19 and the skirt 20 may, for example on account of the force of gravity, rest against a stop (not shown) in such a way that the bottom edge 25 runs at an angle α with respect to the floor 6.

In this embodiment, the position of the lowest point 26 may be adjusted in the same way as described above with reference to Figs 2, 3a and 3b. Although not shown in Figs 4a, 4b and 4c, the vehicle 10 according to this embodiment also comprises an electrical adjustment motor 34 for swivelling the skirt carrier 19 about the swivel axis 28. The operation thereof corresponds to what has been described above with reference to Figs 2, 3a and 3b.

As is illustrated in Fig. 4c, the angle β changes as a result of skirt carrier 19 with the parallelogram structure 40 being swivelled. Irrespective of the position of the lowest point 26 on the bottom edge 25 of the skirt 20, i.e. in each angular position of the skirt carrier 19 determined by the angle β, the lying parts 41, 42 of the parallelogram structure 40 remain substantially in line with the connecting line between the lowest point 26 and the axis of rotation 27 of the skirt 20. As a result thereof, the lying parts 41 always extend in the direction in which the forces are transmitted at the lowest point 26 into the skirt 20. The forces exerted on the skirt 20 are absorbed by the parallelogram structure 40 in the direction of the lying parts 41, which is particularly advantageous from a mechanical point of view.

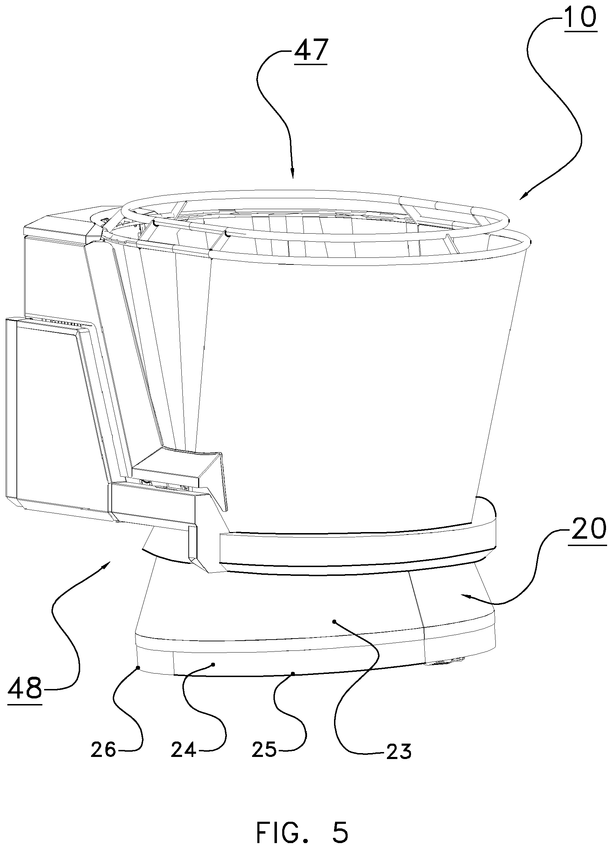

The vehicle according to the invention may form a feed wagon, as illustrated in Fig. 5, in which identical or similar parts are denoted by the same reference numerals. The vehicle 10 comprises a container 47 for accommodating feed. The container 47 incorporates a mixing device for mixing feed, for example an auger with a substantially vertical axis of rotation (not shown). The feed wagon 10 comprises a dispensing device 48 for dispensing the feed accommodated in the container 47. By means of the feed wagon 10 illustrated in Fig. 5, feed can automatically be placed along the feeding fence 1. In addition, the feed wagon 10 is suitable for displacing and/or pushing feed in the direction of the feeding fence 1, as has been described above for the vehicle 10 according to the first and second embodiment.

The invention is not limited to the embodiments illustrated in the figures. The person skilled in the art may perform various changes and modifications which are within the scope of the invention. Furthermore, the above-described features may be applied, both separately and in any desired combination, in the vehicle, the system or the method according to one or more of the claims.

## Claims

1. Vehicle for displacing feed (2) which is lying on a floor (6), in particular feed (2) along a feeding fence (1), which vehicle (10) comprises:
- a frame which is provided with:
• several wheels (11, 12) which are displaceable across the floor,
• a drive and steer system for driving and steering the vehicle (10), which drive and steer system is provided with at least one electrical drive motor (14) for driving at least one of the wheels (11, 12) and a battery system (15) for storing electrical energy, which battery system (15) is connected to the or each electrical drive motor (14),
- a skirt carrier (19) which is arranged on the frame,
- a circumferential skirt (20) having an outer surface for displacing the feed (2) lying on the floor, wherein the skirt is suspended from the skirt carrier (19) so as to be rotatable about an axis of rotation (27), which runs obliquely at an angle (α) with respect to the vertical, and wherein the skirt (20) has a circumferential bottom edge (25) which extends in a plane which runs substantially at right angles with respect to the axis of rotation (27) and runs with respect to the floor (6) at said angle (α), in such a way that a lowest point (26) of said bottom edge (25) contacts the floor (6) and/or the feed (2) lying thereon and the skirt (20) rotates about said axis of rotation (27) when the vehicle (10) is displaced in a direction of travel as a result of said contact in order to displace the feed (2) lying on the floor (6) in a direction transversely to the direction of travel of the vehicle (10) by means of the outer surface of the rotating skirt (20),
**characterized in that**
the skirt carrier (19) is connected to the frame so as to be swivelable about a swivel axis (28) which runs substantially vertically, and the position of the lowest point (26) of the bottom edge (25) of the skirt (20), viewed in the peripheral direction of said bottom edge (25), is adjustable by swivelling the skirt carrier (19) about the swivel axis (28).

2. Vehicle according to Claim 1, wherein the vehicle (10) has a central longitudinal axis (29) and wherein the swivel axis (28) is situated on said central longitudinal axis (29).

3. Vehicle according to Claim 1 or 2, wherein the axis of rotation (27) and the swivel axis (28) intersect in a point.

4. Vehicle according to any of the preceding claims, wherein, when the vehicle drives across a flat floor (6), the lowest point (26) of the circumferential bottom edge (25) of the skirt (20) is arranged at a predetermined height, which is preferably greater than or equal to 0, with respect to the floor (6).

5. Vehicle according to any of the preceding claims, wherein the skirt carrier (19) is provided with a swivelling part (31) which is connected to the frame so as to be swivelable about the swivel axis (28), as well as a tilting part (32) which is connected to the swivelling part (31) so as to be tiltable about a substantially horizontal tilting axis (33), wherein the skirt (20) is rotatably suspended from the tilting part (32) of the skirt carrier (19).

6. Vehicle according to Claim 5, wherein the axis of rotation (27) of the skirt (20) is in a vertical plane which is at right angles to the tilting axis (33), and wherein the lowest point (26) of the bottom edge (25) is in said vertical plane.

7. Vehicle according to any of the preceding claims, wherein the vehicle (10) is provided with an electrical adjustment motor (34) which is connected to the battery system (15), and wherein the skirt carrier (19) is drivable by means of the electrical adjustment motor (34) for swivelling the skirt carrier (19) about the swivel axis (28).

8. Vehicle according to Claim 7, wherein the vehicle is provided with a control unit (16) which is connected to the electrical adjustment motor (34), wherein a route for the vehicle (10) is programmed in the control unit (16), and wherein the electrical adjustment motor (34) is controlled by the control unit (16) on the basis of the programmed route to automatically adjust the lowest point (26) when said route is being driven.

9. Vehicle according to any of the preceding claims, wherein the frame is provided with at least one ramp (35), and wherein the skirt carrier (19) is provided with a run-up element (36) which moves along the ramp (35) when the skirt carrier (19) swivels to the ramp (35) in order to lift the skirt carrier (19) and the skirt (20) suspended therefrom in such a way that the bottom edge (25) of the skirt (20) is completely clear from the floor (6).

10. Vehicle according to any of the preceding claims, wherein the skirt carrier (19) comprises a parallelogram structure (40) which makes an upward displacement of the skirt carrier (19) with respect to the frame possible.

11. Vehicle according to any of the preceding claims, wherein the skirt (20) has a normal operating position when the vehicle drives across a flat floor (6), in which the lowest point (26) of the circumferential bottom edge (25) of the skirt (20) is arranged at a predetermined height, which is preferably greater than or equal to 0, with respect to the floor (6), and wherein the skirt carrier (19) is provided with a parallelogram structure (40) which provides freedom of movement to the skirt (20) in order to move from the normal operating position with respect to the floor (6) upwards.

12. Vehicle according to Claims 10 or 11, wherein the parallelogram structure (40) is provided with two lying parts (41, 42) which extend one above the other and two upright parts (43, 44) which are radially spaced apart, wherein the lying parts (41, 42) and the upright parts (43, 44) are hingeably connected to each other, and wherein one of the upright parts (44) can only execute a swivelling movement about the swivel axis (28) with respect to the frame, and the skirt (20) is rotatably suspended from the other upright part (43).

13. Vehicle according to Claim 12, wherein the lowest point (26) of the bottom edge (25) and the axis of rotation (27) of the skirt (20) delimit a substantially vertical plane, and wherein the lying parts (41, 42) extend substantially parallel to said plane, irrespective of the position of the lowest point (26) of the bottom edge (25) of the skirt (20), viewed in the peripheral direction of said bottom edge (25).

14. Vehicle according to any of the preceding claims, wherein the vehicle (10) is provided with a distance-determining device (18) for determining the distance up to a feeding fence (1) situated on the floor (6), and a control unit (16) which is connected to the distance-determining device (18) and to the drive and steer system of the vehicle (10), wherein the control unit (16) is configured to drive the vehicle (10) at a predetermined distance along the feeding fence (1).

15. Vehicle according to any of the preceding claims, wherein the vehicle (10) forms a feed wagon, which is provided with a container (47) for accommodating feed, and a dispensing device (48) for dispensing feed accommodated in the container.

16. System, comprising a feeding fence (1) and a vehicle (10) according to any of the preceding claims.

17. Method for displacing feed (2) which is lying on a floor (6), in particular feed (2) along a feeding fence (1), by means of a vehicle (10) according to any of the preceding claims, wherein the method comprises:
- driving the vehicle (10) across the floor (6) in a first direction of travel, wherein the lowest point (26) is at a first position on the bottom edge (25) of the skirt (20), viewed in the peripheral direction of said bottom edge (25), and wherein the lowest point (26), in the first position, makes contact with the floor (6) and/or the feed (2) lying thereon and the skirt (20), as a result of said contact, rotates about the axis of rotation (27) in order to displace the feed (2) which is lying on the floor (6) in a direction transversely to the first direction of travel of the vehicle (10) by means of the outer surface of the rotating skirt (20),
- moving the lowest point (26) by means of swivelling the skirt carrier (19) about the swivel axis (28) from the first position to a second position on the bottom edge (25) of the skirt (20), viewed in the peripheral direction of said bottom edge (25), wherein the second position differs from the first position,
- driving the vehicle (10) across the floor (6) in a second direction of travel, wherein the lowest point (26), in the second position, makes contact with the floor (6) and/or the feed (2) lying thereon and the skirt (20), as a result of said contact, rotates about the axis of rotation (27) in order to move the feed (2) which is lying on the floor (6) in a direction transversely to the second direction of travel of the vehicle (10) by means of the outer surface of the rotating skirt (20).

18. Method according to Claim 17, wherein the first direction of travel and the second direction of travel are opposed to each other, and wherein the first position and the second position are situated on either side of a vertical central plane (30) of the vehicle (10).

19. Method according to Claim 17 or 18, wherein the vehicle is provided with an electrical adjustment motor (34) which is connected to the battery system (15), and a control unit (16) which is connected to the electrical adjustment motor (34), wherein the skirt carrier (19) is driven by means of the electrical adjustment motor (34) in order to swivel the skirt carrier (19) about the swivel axis (28), and wherein a route is programmed for the vehicle (10) in the control unit (16), and wherein the electrical adjustment motor (34) is controlled by the control unit (16) on the basis of the programmed route to automatically adjust the lowest point (26) when said route is being driven.

## Patentansprüche

1. Fahrzeug zum Verschieben von auf einem Boden (6) liegenden Futter (2), insbesondere von Futter (2) entlang einem Fressgitter (1), wobei das Fahrzeug (10) Folgendes umfasst:
- einen Rahmen, der mit Folgendem versehen ist:
- mehreren Rädern (11, 12), die über den Boden bewegbar sind,
- ein Fahr- und Lenksystem zum Fahren und Lenken des Fahrzeugs (10), wobei das Fahr- und Lenksystem mit mindestens einem elektrischen Antriebsmotor (14) zum Antreiben mindestens eines der Räder (11, 12) und einem Batteriesystem (15) zum Speichern von elektrischer Energie versehen ist, wobei das Batteriesystem (15) mit dem oder jedem elektrischen Antriebsmotor (14) verbunden ist,
- einen Schürzenträger (19), der an dem Rahmen angeordnet ist,
- eine Umfangsschürze (20), die eine Außenfläche zum Verschieben des auf dem Boden liegenden Futters (2) aufweist, wobei die Schürze von dem Schürzenträger (19) herabhängt, derart, dass sie um eine schräg in einem Winkel (α) bezüglich der Vertikalen verlaufende Drehachse (27) drehbar ist, und wobei die Schürze (20) einen unteren Umfangsrand (25) aufweist, der sich in einer Ebene erstreckt, die im Wesentlichen im rechten Winkel bezüglich der Drehachse (27) verläuft und bezüglich des Bodens (6) in dem Winkel (α) so verläuft, dass ein tiefster Punkt (26) des unteren Rands (25) den Boden (6) und/oder das darauf liegende Futter (2) berührt und sich die Schürze (20) um die Drehachse (27) dreht, wenn das Fahrzeug (10) infolge der Berührung in eine Fahrtrichtung bewegt wird, um das auf dem Boden (6) liegende Futter (2) mittels der Außenfläche der sich drehenden Schürze (20) in eine quer zur Fahrtrichtung des Fahrzeugs (10) verlaufende Richtung zu verschieben,
**dadurch gekennzeichnet, dass**
der Schürzenträger (19) so mit dem Rahmen verbunden ist, dass er um eine im Wesentlichen vertikal verlaufende Schwenkachse (28) schwenkbar ist, und die Position des tiefsten Punkts (26) des unteren Rands (25) der Schürze (20), in Umfangsrichtung des unteren Rands (25) gesehen, durch Schwenken des Schürzenträgers (19) um die Schwenkachse (28) einstellbar ist.

2. Fahrzeug nach Anspruch 1, wobei das Fahrzeug (10) eine mittlere Längsachse (29) aufweist und wobei sich die Schwenkachse (28) auf der mittleren Längsachse (29) befindet.

3. Fahrzeug nach Anspruch 1 oder 2, wobei sich die Drehachse (27) und die Schwenkachse (28) an einem Punkt schneiden.

4. Fahrzeug nach einem der vorhergehenden Ansprüche, wobei, wenn das Fahrzeug über einen flachen Boden (6) fährt, der tiefste Punkt (26) des unteren Umfangsrands (25) der Schürze (20) auf einer vorbestimmten Höhe, die vorzugsweise höher als oder gleich 0 ist, bezüglich des Bodens (6) angeordnet ist.

5. Fahrzeug nach einem der vorhergehenden Ansprüche, wobei der Schürzenträger (19) mit einem Schwenkteil (31) versehen ist, der so mit dem Rahmen verbunden ist, dass er um die Schwenkachse (28) schwenkbar ist, sowie mit einem Kippteil (32), der mit dem Schwenkteil (31) so verbunden ist, dass er um eine im Wesentlichen horizontale Kippachse (33) kippen kann, wobei die Schürze (20) drehbar an dem Kippteil (32) des Schürzenträgers (19) aufgehängt ist.

6. Fahrzeug nach Anspruch 5, wobei sich die Drehachse (27) der Schürze (20) in einer Vertikalebene befindet, die in einem rechten Winkel zu der Kippachse (33) verläuft, und wobei sich der tiefste Punkt (26) des unteren Rands (25) in der Vertikalebene befindet.

7. Fahrzeug nach einem der vorhergehenden Ansprüche, wobei das Fahrzeug (10) mit einem elektrischen Stellmotor (34) versehen ist, der mit dem Batteriesystem (15) verbunden ist, und wobei der Schürzenträger (19) mittels des elektrischen Stellmotors (34) zum Schwenken des Schürzenträgers (19) um die Schwenkachse (28) antreibbar ist.

8. Fahrzeug nach Anspruch 7, wobei das Fahrzeug mit einer Steuereinheit (16) versehen ist, die mit dem elektrischen Stellmotor (34) verbunden ist, wobei eine Route für das Fahrzeug (10) in die Steuereinheit (16) einprogrammiert ist und wobei der elektrische Stellmotor (34) durch die Steuereinheit (16) basierend auf der einprogrammierten Route gesteuert wird, um den tiefsten Punkt (26) automatisch einzustellen, wenn die Route gefahren wird.

9. Fahrzeug nach einem der vorhergehenden Ansprüche, wobei der Rahmen mit mindestens einer Rampe (35) versehen ist und wobei der Schürzenträger (19) mit einem Hochlaufelement (36) versehen ist, das sich entlang der Rampe (35) bewegt, wenn der Schürzenträger (19) zur Rampe (35) schwenkt, um den Schürzenträger (19) und die davon herabhängende Schürze (20) anzuheben, so dass der untere Rand (25) der Schürze (20) vollständig von dem Boden (6) getrennt ist.

10. Fahrzeug nach einem der vorhergehenden Ansprüche, wobei der Schürzenträger (19) eine Parallelogrammstruktur (40) umfasst, die eine Aufwärtsbewegung des Schürzenträgers (19) bezüglich des Rahmens ermöglicht.

11. Fahrzeug nach einem der vorhergehenden Ansprüche, wobei die Schürze (20) eine Normalbetriebsposition hat, wenn das Fahrzeug über einen flachen Boden (6) fährt, in der der tiefste Punkt (26) des unteren Umfangsrands (25) der Schürze (20) auf einer vorbestimmten Höhe, die vorzugsweise größer als oder gleich 0 ist, bezüglich des Bodens (6) angeordnet ist, und wobei der Schürzenträger (19) mit einer Parallelogrammstruktur (40) versehen ist, die der Schürze (20) Bewegungsfreiheit zur Bewegung aus der Normalbetriebsposition bezüglich des Bodens (6) nach oben verleiht.

12. Fahrzeug nach Anspruch 10 oder 11, wobei die Parallelogrammstruktur (40) mit zwei liegenden Teilen (41, 42), die sich übereinander erstrecken, und zwei aufrechten Teilen (43, 44), die radial beabstandet sind, versehen ist, wobei die liegenden Teile (41, 42) und die aufrechten Teile (43, 44) aneinander angelenkt sind und wobei einer der aufrechten Teile (44) nur eine Schwenkbewegung um die Schwenkachse (28) bezüglich des Rahmens ausführen kann und die Schürze (20) drehbar an dem anderen aufrechten Teil (43) aufgehängt ist.

13. Fahrzeug nach Anspruch 12, wobei der tiefste Punkt (26) des unteren Rands (25) und die Drehachse (27) der Schürze (20) eine im Wesentlichen vertikale Ebene begrenzen und wobei sich die liegenden Teile (41, 42) unabhängig von der Position des tiefsten Punkts (26) des unteren Rands (25) der Schürze (20), gesehen in Umfangsrichtung des unteren Rands (25), im Wesentlichen parallel zu der Ebene erstrecken.

14. Fahrzeug nach einem der vorhergehenden Ansprüche, wobei das Fahrzeug (10) mit einer Abstandsbestimmungsvorrichtung (18) zum Bestimmen des Abstands zu einem sich auf dem Boden (6) befindenden Fressgitter (1) und einer Steuereinheit (16), die mit der Abstandsbestimmungsvorrichtung (18) und mit dem Fahr- und Lenksystem des Fahrzeugs (10) verbunden ist, versehen ist, wobei die Steuereinheit (16) dazu konfiguriert ist, das Fahrzeug (10) in einem vorbestimmten Abstand entlang dem Fressgitter (1) zu fahren.

15. Fahrzeug nach einem der vorhergehenden Ansprüche, wobei das Fahrzeug (10) einen Futterwagen, der mit einem Behälter (47) zur Aufnahme von Futter versehen ist, und eine Abgabevorrichtung (48) zur Abgabe von in dem Behälter aufgenommenem Futter bildet.

16. System, das ein Fressgitter (1) und ein Fahrzeug (10) nach einem der vorhergehenden Ansprüche umfasst.

17. Verfahren zum Verschieben von auf einem Boden (6) liegenden Futter (2), insbesondere von Futter (2) entlang einem Fressgitter (1), mittels eines Fahrzeugs (10) nach einem der vorhergehenden Ansprüche, wobei das Verfahren Folgendes umfasst:
- Fahren des Fahrzeugs (10) über den Boden (6) in eine erste Fahrtrichtung, wobei sich der tiefste Punkt (26), in Umfangsrichtung des unteren Rands (25) gesehen, in einer ersten Position am unteren Rand (25) der Schürze (20) befindet, und wobei der tiefste Punkt (26) in der ersten Position den Boden (6) und/oder darauf liegendes Futter (2) berührt und sich die Schürze (20) infolge der Berührung um die Drehachse (27) dreht, um das auf dem Boden (6) liegende Futter (2) mittels der Außenfläche der sich drehenden Schürze (20) in eine quer zu der ersten Fahrtrichtung des Fahrzeugs (10) verlaufende Richtung zu verschieben,
- Bewegen des tiefsten Punkts (26) mittels Schwenkens des Schürzenträgers (19) um die Schwenkachse (28) aus der ersten Position in eine zweite Position am unteren Rand (25) der Schürze (20), gesehen in der Umfangsrichtung des unteren Rands (25), wobei sich die zweite Position von der ersten Position unterscheidet,
- Fahren des Fahrzeugs (10) über den Boden (6) in eine zweite Fahrtrichtung, wobei der tiefste Punkt (26) in der zweiten Position den Boden (6) und/oder das darauf liegende Futter (2) berührt und sich die Schürze (20) infolge der Berührung um die Drehachse (27) dreht, um das auf dem Boden (6) liegende Futter (2) mittels der Außenfläche der sich drehenden Schürze (20) in eine quer zu der zweiten Fahrtrichtung des Fahrzeugs (10) verlaufende Richtung zu verschieben.

18. Verfahren nach Anspruch 17, wobei die erste Fahrtrichtung und die zweite Fahrtrichtung entgegengesetzt zueinander sind und wobei sich die erste Position und die zweite Position auf beiden Seiten einer mittleren Vertikalebene (30) des Fahrzeugs (10) befinden.

19. Verfahren nach Anspruch 17 oder 18, wobei das Fahrzeug mit einem elektrischen Stellmotor (34), der mit dem Batteriesystem (15) verbunden ist, und einer Steuereinheit (16), die mit dem elektrischen Stellmotor (34) verbunden ist, versehen ist, wobei der Schürzenträger (19) mittels des elektrischen Stellmotors (34) zum Schwenken des Schürzenträgers (19) um die Schwenkachse (28) angetrieben wird und wobei eine Route für das Fahrzeug (10) in die Steuereinheit (16) einprogrammiert ist und wobei der elektrische Stellmotor (34) durch die Steuereinheit (16) basierend auf der einprogrammierten Route gesteuert wird, um den tiefsten Punkt (26) automatisch einzustellen, wenn die Route gefahren wird.

## Revendications

1. Véhicule destiné à déplacer une alimentation (2) qui est située sur un plancher (6), en particulier une alimentation (2) le long d'une clôture d'alimentation (1), lequel véhicule (10) comprend :
- un châssis qui est fourni avec :
• plusieurs roues (11, 12) déplaçables sur le plancher,
• un système d'entraînement et de direction pour entraîner et diriger le véhicule (10), lequel système d'entraînement et de direction est pourvu d'au moins un moteur d'entraînement électrique (14) pour entraîner au moins l'une des roues (11, 12) et un système de batterie (15) pour stocker de l'énergie électrique, lequel système de batterie (15) est connecté au ou à chaque moteur d'entraînement électrique (14),
- un support de jupe (19) qui est disposé sur le châssis,
- une jupe circonférentielle (20) ayant une surface extérieure pour déplacer l'alimentation (2) située sur le plancher, la jupe étant suspendue au support de jupe (19) de manière à pouvoir tourner autour d'un axe de rotation (27), qui s'étend obliquement à un angle (α) par rapport à la verticale, et la jupe (20) ayant un bord inférieur circonférentiel (25) qui s'étend dans un plan qui s'étend sensiblement à angle droit par rapport à l'axe de rotation (27) et qui s'étend par rapport au plancher (6) audit angle (α), de telle sorte qu'un point le plus bas (26) dudit bord inférieur (25) vient en contact avec le plancher (6) et/ou avec l'alimentation (2) qui s'y trouve et la jupe (20) tourne autour dudit axe de rotation (27) lorsque le véhicule (10) est déplacé dans une direction de déplacement en raison dudit contact afin de déplacer l'alimentation (2) se trouvant sur le plancher (6) dans une direction transversale à la direction de déplacement du véhicule (10) au moyen de la surface extérieure de la jupe rotative (20),
**caractérisé en ce que**
le support de jupe (19) est relié au châssis de manière à pouvoir pivoter autour d'un axe de pivotement (28) qui s'étend sensiblement verticalement, et la position du point le plus bas (26) du bord inférieur (25) de la jupe (20), vue dans la direction périphérique dudit bord inférieur (25), est réglable en faisant pivoter le support de jupe (19) autour de l'axe de pivotement (28).

2. Véhicule selon la revendication 1, dans lequel le véhicule (10) a un axe longitudinal central (29) et dans lequel l'axe de pivotement (28) est situé sur ledit axe longitudinal central (29).

3. Véhicule selon la revendication 1 ou 2, dans lequel l'axe de rotation (27) et l'axe de pivotement (28) se croisent en un point.

4. Véhicule selon l'une quelconque des revendications précédentes, dans lequel, lorsque le véhicule traverse un plancher plat (6), le point le plus bas (26) du bord inférieur circonférentiel (25) de la jupe (20) est disposé à une hauteur prédéterminée, qui est de préférence supérieure ou égale à 0, par rapport au plancher (6).

5. Véhicule selon l'une quelconque des revendications précédentes, dans lequel le support de jupe (19) est muni d'une partie pivotante (31) qui est reliée au châssis de manière à pouvoir être pivotée autour de l'axe de pivotement (28), ainsi qu'une partie basculante (32) qui est reliée à la partie pivotante (31) de manière à pouvoir être basculée autour d'un axe de basculement sensiblement horizontal (33), dans lequel la jupe (20) est suspendue de manière rotative à la partie basculante (32) du support de jupe (19).

6. Véhicule selon la revendication 5, dans lequel l'axe de rotation (27) de la jupe (20) se trouve dans un plan vertical qui est perpendiculaire à l'axe de basculement (33), et dans lequel le point le plus bas (26) du bord inférieur (25) se trouve dans ledit plan vertical.

7. Véhicule selon l'une quelconque des revendications précédentes, le véhicule (10) étant muni d'un moteur électrique de réglage (34) qui est relié au système de batterie (15), et le support de jupe (19) pouvant être entraîné au moyen du moteur électrique de réglage (34) pour faire pivoter le support de jupe (19) autour de l'axe de pivotement (28).

8. Véhicule selon la revendication 7, le véhicule étant muni d'une unité de commande (16) qui est connectée au moteur électrique de réglage (34), un itinéraire pour le véhicule (10) étant programmé dans l'unité de commande (16), et le moteur électrique de réglage (34) étant commandé par l'unité de commande (16) sur la base de l'itinéraire programmé pour régler automatiquement le point le plus bas (26) lorsque ledit itinéraire est conduit.

9. Véhicule selon l'une quelconque des revendications précédentes, dans lequel le châssis est muni d'au moins une rampe (35), et dans lequel le support de jupe (19) est muni d'un élément de course (36) qui se déplace le long de la rampe (35) lorsque le support de jupe (19) pivote vers la rampe (35) afin de soulever le support de jupe (19) et la jupe (20) suspendue à celui-ci de telle sorte que le bord inférieur (25) de la jupe (20) est complètement dégagé du plancher (6).

10. Véhicule selon l'une quelconque des revendications précédentes, dans lequel le support de jupe (19) comprend une structure en parallélogramme (40) qui rend possible un déplacement vers le haut du support de jupe (19) par rapport au châssis.

11. Véhicule selon l'une quelconque des revendications précédentes, dans lequel la jupe (20) a une position normale de fonctionnement lorsque le véhicule traverse un plancher (6) plat, dans lequel le point le plus bas (26) du bord inférieur circonférentiel (25) de la jupe (20) est disposé à une hauteur prédéterminée, qui est de préférence supérieure ou égale à 0, par rapport au plancher (6), et dans lequel le support de jupe (19) est muni d'une structure en parallélogramme (40) qui offre une liberté de mouvement à la jupe (20) afin de se déplacer de la position normale de fonctionnement par rapport au plancher (6) vers le haut.

12. Véhicule selon la revendication 10 ou 11, dans lequel la structure en parallélogramme (40) est munie de deux parties couchées (41, 42) qui s'étendent l'une au-dessus de l'autre et de deux parties verticales (43, 44) qui sont espacées radialement, dans lequel les parties couchées (41, 42) et les parties verticales (43, 44) sont reliées les unes aux autres de manière articulée, et dans lequel une des parties verticales (44) peut seulement exécuter un mouvement de pivotement autour de l'axe de pivotement (28) par rapport au châssis, et la jupe (20) est suspendue de manière rotative de l'autre partie verticale (43).

13. Véhicule selon la revendication 12, dans lequel le point le plus bas (26) du bord inférieur (25) et l'axe de rotation (27) de la jupe (20) délimitent un plan sensiblement vertical, et dans lequel les parties couchées (41, 42) s'étendent sensiblement parallèlement audit plan, indépendamment de la position du point le plus bas (26) du bord inférieur (25) de la jupe (20), vu dans la direction périphérique dudit bord inférieur (25).

14. Véhicule selon l'une quelconque des revendications précédentes, le véhicule (10) étant muni d'un dispositif de détermination de distance (18) pour déterminer la distance jusqu'à un guide d'alimentation (1) situé sur le plancher (6), et d'une unité de commande (16) qui est reliée au dispositif de détermination de distance (18) et au système d'entraînement et de direction du véhicule (10), l'unité de commande (16) étant configurée pour entraîner le véhicule (10) à une distance prédéterminée le long de la clôture d'alimentation (1).

15. Véhicule selon l'une quelconque des revendications précédentes, le véhicule (10) formant un wagon d'alimentation, qui est muni d'un conteneur (47) pour recevoir l'alimentation, et d'un dispositif de distribution (48) pour distribuer l'alimentation logée dans le conteneur.

16. Système, comprenant une clôture d'alimentation (1) et un véhicule (10) selon l'une quelconque des revendications précédentes.

17. Procédé destiné à déplacer une alimentation (2) qui est située sur un plancher (6), en particulier une alimentation (2) le long d'une clôture d'alimentation (1), au moyen d'un véhicule (10) selon l'une quelconque des revendications précédentes, le procédé consistant à:
- conduire le véhicule (10) à travers le plancher (6) dans une première direction de déplacement, dans lequel le point le plus bas (26) se trouve à une première position sur le bord inférieur (25) de la jupe (20), vu dans la direction périphérique dudit bord inférieur (25), et dans lequel le point le plus bas (26), dans la première position, est en contact avec le plancher (6) et/ou avec l'alimentation (2) qui s'y trouve et la jupe (20), par suite dudit contact, tourne autour de l'axe de rotation (27) afin de déplacer l'alimentation (2) qui se trouve sur le plancher (6) dans une direction transversale à la première direction de déplacement du véhicule (10) au moyen de la surface extérieure de la jupe rotative (20),
- déplacer le point le plus bas (26) en faisant pivoter le support de jupe (19) autour de l'axe de pivotement (28) de la première position à une seconde position sur le bord inférieur (25) de la jupe (20), vu dans la direction périphérique dudit bord inférieur (25), la seconde position différant de la première position,
- conduire le véhicule (10) à travers le plancher (6) dans une seconde direction de déplacement, dans lequel le point le plus bas (26), dans la seconde position, entre en contact avec le plancher (6) et/ou avec l'alimentation (2) qui s'y trouve et la jupe (20), par suite dudit contact, tourne autour de l'axe de rotation (27) afin de déplacer l'alimentation (2) qui se trouve sur le plancher (6) dans une direction transversale à la seconde direction de déplacement du véhicule (10) au moyen de la surface extérieure de la jupe rotative (20).

18. Procédé selon la revendication 17, dans lequel la première direction de déplacement et la seconde direction de déplacement sont opposées l'une à l'autre, et dans lequel la première position et la seconde position sont situées de part et d'autre d'un plan central vertical (30) du véhicule (10).

19. Procédé selon la revendication 17 ou 18, dans lequel le véhicule est équipé d'un moteur électrique de réglage (34) qui est relié au système de batterie (15), et d'une unité de commande (16) qui est reliée au moteur électrique de réglage (34), dans lequel le support de jupe (19) est entraîné au moyen du moteur électrique de réglage (34) afin de faire pivoter le support de jupe (19) autour de l'axe de pivotement (28), et dans lequel un itinéraire est programmé pour le véhicule (10) dans l'unité de commande (16), et dans lequel le moteur électrique de réglage (34) est commandé par l'unité de commande (16) sur la base de l'itinéraire programmé pour régler automatiquement le point le plus bas (26) lorsque ledit itinéraire est conduit.
